# EUROPEAN PATENT APPLICATION

(11) **EP 3 088 483 A1**
(43) Date of publication of application: **02.11.2016**
(21) Application number: 15020063.2
(22) Date of filing: 26.04.2015
(51) Int. Cl.: C09G 1/02

(54) **ABRASIVE PASTES FOR CLEANING AND POLISHING**

(71) Applicant: Viacheslav, Rubenok, 55442 Stromberg (DE)
(72) Inventor: Viacheslav, Rubenok, 55442 Stromberg (DE)

(57) **Abstract**

Abrasive pastes for cleaning and polishing, wherein as abrasive component is used spherical calcium carbonate.

## Description

Abrasive pastes for cleaning and polishing.

### Field of the Invention

The present invention relates to cleaning and polishing pastes with abrasive materials in their composition.

### Background of the Invention

Polishing and cleaning are two widespread processes. Often for these processes abrasive materials are used. And often necessary results are reached only when abrasive material is in composition of abrasive paste.

The importance of abrasive pastes in many areas of human activity is indicated the fact that, despite the huge number of compositions such pastes and abrasive materials used in such pastes, constant work is going over creating new compositions of these pastes [1], as well as over a developing of new abrasive particles and materials for these pastes [2].

### Summary of the Invention

For further development of abrasive pastes, for improving results obtained with them, for increasing the range of processed surfaces, this invention offers, as abrasive component in pastes for cleaning and polishing, to use spherical calcium carbonate.

### Brief Description of the Drawings

Fig. 1. Scanning electronic microscopy image of CaCO₃ particles [3].
Fig. 2. Schematic drawing of cleaning process.

### Detailed Description of the Invention

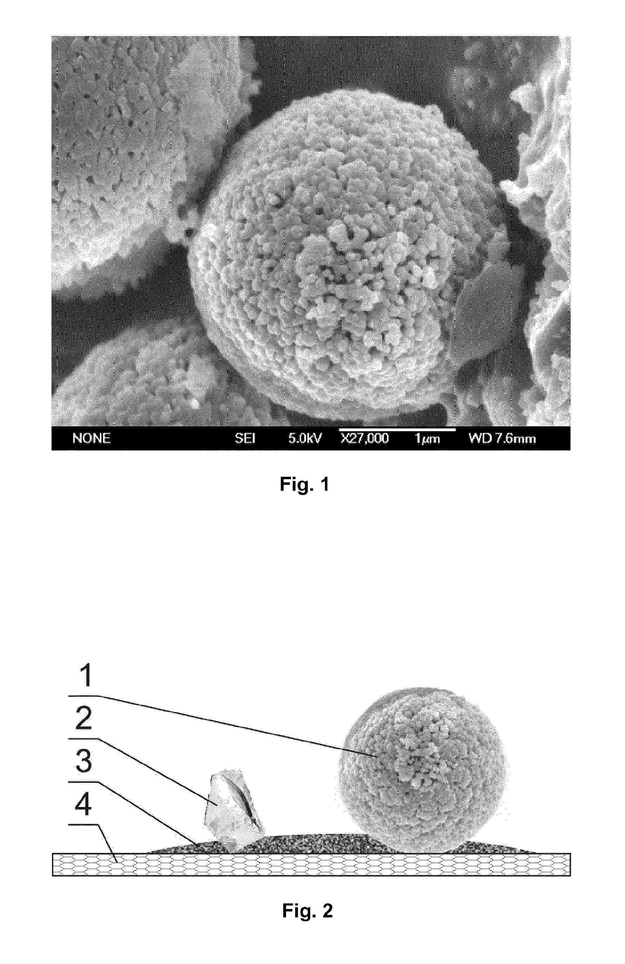

The form and structure of the spherical calcium carbonate is presented in Fig. 1. The size of spheres can change in the wide range. The choice of the size of grains of the spherical calcium carbonate can be defined by purpose of paste and requirements imposed to it.

In Fig. 2 schematically represented process of cleaning of a surface 4 from pollution 3 by spherical carbonate of calcium 1 or by usual crystal abrasives 2 like, for example, sodium bicarbonate.

Also the Fig. 2 shows that the cleaning and polishing of the surface by a paste with the spherical calcium carbonate has a number of advantages, the most important of which are the following:
1 - due to the spherical shape of the particles is reduced the risk of scratching the surface, thereby it is increasing the permissible range of the processed surfaces.
2 - for certain pollutions is accelerated cleaning process and becomes possible such cleaning.
3 - when polishing because particles of a spherical carbonate of calcium as if stroke a surface, the result can be reached with a bigger accuracy that is important in many areas, for example, at production of removable dentures.

### Example 1: Cleaning paste for domestic use.

A composition of the paste could be as follows:
a) spherical calcium carbonate 60-70%
b) water 25-30%
c) anionic surfactant 4-7%
d) amphoteric surfactant 1-2%
e) preservatives (for example, benzisothiazolinone and methilisothiazolinone) < 1%
f) flavoring substance < 1%
g) colorant < 1%

This paste was prepared and has shown excellent results when cleaning a surface of a glass ceramic cooktop, when cleaning glass jars from the label adhesive, when cleaning a glass and chrome parts of an oven, when removing paint's drip from ceramic tile.

### Example 2: Abrasive paste for use in cases where the presence of water is undesirable.

A composition of the paste could be as follows:
a) spherical calcium carbonate 60-80%
b) petroleum jelly 15-35%
c) benzene 1-5%

This paste was prepared and has shown excellent results when removing paint's drips from black steel pipe.

### Example 3: Polishing paste for plastic.

A composition of the paste could be as follows:
a) spherical calcium carbonate 60-90%
b) vegetable oil 10-40%
c) sodium benzoate < 1%

This paste was prepared and has shown excellent results when polishing acrylic plastic using a felt polishing wheel.

### References

[1] Patent EP2826827 (A1), CMP composition comprising abrasive particles containing ceria.
[2] Patent WO2014209567 (A1), ABRASIVE PARTICLES, METHOD OF MAKING ABRASIVE PARTICLES, AND ABRASIVE ARTICLES.
[3] Yaran Zhang, Ping Ma, Yao Wang, Juan Du, Qi Zhou, Zhihong Zhu, Xu Yang, Junlin Yuan, «Biocompatibility of Porous Spherical Calcium Carbonate Microparticles on Hela Cells», World Journal of Nano Science and Engineering, 2012, 2, 25-31.

## Claims

1. brasive pastes for cleaning and polishing, wherein as abrasive component is used spherical calcium carbonate.
